(19) Europäisches Patentamt
European Patent Office
Office européen des brevets

(11) **EP 2 873 649 A1**

(12) **EUROPEAN PATENT APPLICATION**

(43) Date of publication:
**20.05.2015 Bulletin 2015/21**

(51) Int Cl.:
***C02F 1/20*** *(2006.01)*          *C02F 1/00* *(2006.01)*
*C02F 103/02* *(2006.01)*          *C02F 1/44* *(2006.01)*

(21) Application number: **13192787.3**

(22) Date of filing: **13.11.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Mitsubishi Electric Corporation
Chiyoda-ku
Tokyo 100-8310 (JP)**
• **Mitsubishi Electric R&D Centre Europe B.V.
Livingston EH54 5DJ (GB)**

(72) Inventors:
• **BRAHIM, Messaoudi
Livingston, EH54 5DJ (GB)**
• **KAWALEY, Georgeanna
Livingston, EH54 5DJ (GB)**

(74) Representative: **Pfenning, Meinig & Partner GbR
Patent- und Rechtsanwälte
Theresienhöhe 11a
80339 München (DE)**

(54) **Recirculating water circuit system comprising degassing device**

(57)     Recirculating water circuit system comprising a degassing device (14) being configured for vacuum-based removal of dissolved oxygen from water (w) circulating in the recirculating water circuit system; and a vacuum generating device (16) being connected (15) to the degassing device (14) and being configured to generate a vacuum and to apply it to the degassing device (14) in order to start and/or sustain said vacuum-based removal by the degassing device (14).

Outdoor unit 1 of heat pump
Heat exchanger 2
Compressor 31
Expansion valve 30
Hot water tank 7
Oygen sensor 19'
Heat emitter 12
Living space 13

Fig. 1

EP 2 873 649 A1

**Description**

The present invention relates to a recirculating water circuit system which is configured to remove dissolved oxygen (for example in order to reduce corrosion in the system). Specifically, the system can be a domestic recirculating (or re-circulated) water circuit system. The system can be used as part of a heating device; such as a heat pump for example, used for space heating and/or for hot water production.

In domestic recirculating water circuit systems of heating and ventilation systems, dissolved oxygen is a major problem related to both corrosion and scale deposition in the hot water parts of the circuit. In view of corrosion mechanisms, both, iron and copper elements, can be subjected to corrosion as can be seen from the following two chemical reactions.

Iron Corrosion:

$$2Fe + 2H_2O + O_2 = 2Fe(OH)_2$$

Copper Corrosion:

$$3Cu + H_2O + O_2 = 3CuO + H_2$$

The reaction rates of the shown chemical reactions may be influenced (enhanced and/or delayed) by the water quality and the operation temperature.

As for scale formation, the presence of dissolved oxygen can enhance the calcium carbonate reaction as shown in the following reactions.

Calcium Carbonate Deposition:

$$H_2O \rightarrow 2H^+ + \tfrac{1}{2} O_2 + 2e^-$$

$$2H^+ + 2O_2 + 2e^- \rightarrow 2OH^-$$

$$Ca^{2+} + HCO_3^- + OH^- \rightarrow CaCO_3 + H_2O$$

Regarding the formation of silicate scale, the essential reactions are as follows.

Silicate Deposition:

$$H_2O \rightarrow 2H^+ + \tfrac{1}{2} O_2 + 2e^-$$

$$2H^+ + 2O_2 + 2e^- \rightarrow 2OH^-$$

$$Si(OH)_4 + OH^- \rightarrow (OH)_3SiO^- + H_2O$$

$$Si(OH)_3^- + Si(OH)_4 \rightarrow (OH)_3Si\text{-}O\text{-}Si(OH)_3 + OH^-$$

The problem of dissolved oxygen has been the subject of several investigations consisting of either a chemical or a physical approach. A physical dissolved oxygen removal process is for example described in CA 2 308 744 C. A chemical dissolved oxygen removal process is for example described in US 5,244,600. A physical dissolved oxygen removal process can use steam stripping or nitrogen purging. A chemical removal process can add reducing chemical reagents such a hydrogen or sodium sulphite to water to enhance the oxygen removal.

It is therefore the object of the present invention to provide, specifically for a recirculating water circuit system (especially for a recirculating water circuit system as part of a heating device, especially a heat pump, used for space heating and/or for hot water production), a solution for dissolved oxygen removal, i.e. a recirculating water circuit system adapted to remove dissolved oxygen from the water circulating in the recirculating water circuit system. It is further the object of the present invention to provide a heating device (especially: heat pump) comprising a recirculating water circuit system adapted to remove dissolved oxygen and to provide a method for removing dissolved oxygen in a recirculating water circuit system. It is also the object of the present invention to provide a dissolved oxygen removal system and method in which no chemicals are necessary and in which an efficient removal of dissolved oxygen is possible. Finally, it is the object of the present invention to provide a dissolved oxygen removal system and method in which corrosion of parts being in contact with water (such as for example heat emitters and/or heat exchangers) is prevented or at least reduced and in which calcium carbonate and/or silicate based scale deposition is prevented or at least reduced.

These objectives of the present invention are solved by the recirculating water circuit system according to claim 1, the devices according to claim 14 and the method according to claim 15. The dependent claims describe advantageous system, device or method configurations.

Hereinafter, the present invention is at first described in a general way followed by specific, exemplary embodiments. It is important to note that the configurations shown in the exemplary embodiments do not need to be realized, within the scope of the appended claims, in exactly the shown form: Single elements and/or method steps described in an exemplary embodiment can also be omitted or combined (with other elements and/or steps of another exemplary embodiment) in a different way without departing from the scope of the present invention as described by the appended claims.

In general, the recirculating water circuit system according to the invention (i.e. the dissolved oxygen removal system according to the invention) can comprise a vacuum generating device which is connected to a hot water circulating system. It can further comprise a degassing pipe which connects a degassing device arranged in the hot water circulating system to said vacuum generating device. A (dissolved) oxygen monitoring device can be used together with a signal controller in order to monitor at least one quantity which characterizes the content of dissolved oxygen in the water circulating in the recirculating water circuit system and the dissolved oxygen removal system, respectively. The system can use a central controlling device as signal controller.

Furthermore, the (dissolved) oxygen monitoring device can either monitor at least one quantity characterizing the content of dissolved oxygen directly in the water circulating in the system or indirectly in a gaseous phase, i.e. as a partial pressure of degassed oxygen already removed from the circulating water (the partial pressure can for example be monitored in a pipe for removing the said degassed oxygen from the degassing device). Therefore, both, the concentration of dissolved oxygen still present in the circulating water and the (partial) pressure of already removed, degassed oxygen, can be monitored in order to control the recirculating water circuit system according to the invention.

A recirculating water circuit system according to the invention is described in independent claim 1.

Preferably, the vacuum generating device is a vacuum pump. However, other vacuum generating devices can also be used.

First aspects which can be advantageously realized in the system according to claim 1 are described in dependent claims 2 and 3.

In the first alternative of claim 3, the degassing device can comprise exactly one single flat membrane or a hollow fibre membrane module.

The said membranes could be either hydrophilic or hydrophobic based on PEEK (polyether ether ketone) or based on propylene. Specifically, contactor modules on this basis which can be used in the present invention are described in "Hybrid membrane/absorption process for acid gas removal in FLNG applications" by J. ZHOU et al., Gas Technology Institute. Also, gas transfer membranes as described in "Carbon dioxide and dissolved oxygen removal from makeup water by gas transfer membranes" by S.H. Macklin et al., GE Water & Process Technologies, January 2010, can be used.

Further aspects which can be advantageously realized are described in dependent claim 4 (these advantageous aspects can be realized independent of the advantageous aspects described in claims 2 and 3, but also in combination therewith -this also holds for the advantageous aspects described in the subsequent dependent claims). A direct contact conventional vent evaporator configuration which is well known in the literature can be used as a degassing device as well.

Further aspects which can be advantageously realized in the system according to claim 1 are described in dependent claim 5 to 11. These aspects especially allow for configuration of the recirculating water circuit system for a controlled and/or intermittent removal of dissolved oxygen from the water as follows (besides a configuration for an uncontrolled, continuous removal of dissolved oxygen).

Said vacuum-based removal of dissolved oxygen from the water circulating in the recirculating water circuit system can be started and/or sustained by switching the water flow in a water through-flow pipe over to a bypass pipe of said water through-flow pipe in which said degassing device (to which a vacuum is already applied by the vacuum generating device) is arranged. Said switching over from a main pipe of the through-flow pipe (in which no removal of dissolved oxygen is performed) to said bypass pipe can be done with help of adequately arranged valves controlled by the central controlling device.

However, preferably, the starting and/or sustaining of said vacuum-based removal of dissolved oxygen from the water circulating in the recirculating water circuit system is done as follows: If the vacuum generating device is provided with an instruction to start (or to sustain) the generation and application of a vacuum (the instruction can be provided by the central controlling device), a vacuum is applied, by the vacuum generating device, to the degassing device so that the vacuum-based removal of dissolved oxygen from the water circulating in the circuit system starts (or is sustained) in the said degassing device. Then, no bypass pipe is necessary and the degassing device can be arranged directly in the main pipe and the water through-flow pipe, respectively. The vacuum can be applied from the vacuum generating device to the degassing device through a degassing pipe which connects the vacuum generating device with the degassing device.

According to claim 7, the oxygen sensor can be realized as a through-flow sensor which can be arranged in or at the water through-flow pipe connecting the heat exchanger with a heat emitter (compare claim 12). Specifically, this sensor can be arranged (seen in water-flowing direction) upstream of the degassing device, but is preferably arranged downstream of the degassing device. The operation principle and configuration of such oxygen sensors is well-known for the skilled person; for example the "ORBISPHERE A1100 Oxygen sensor" of Hach Lange or the "WQ401 Dissolved Oxygen Sensor" of Global Water can be used in the present invention.

The pressure sensor of claim 8 can be realized as a through-flow sensor which monitors the partial pressure of degassed oxygen (i.e. dissolved oxygen which has already been removed from the water circulating in the recirculating water circuit system) in the degassing pipe between the degassing device on the one hand and the vacuum generating device on the other hand. The operation principle and the configuration of such pressure sensors measuring in gaseous atmosphere are well-known for the skilled person.

It is possible to use both of the aforementioned types of sensors in the recirculating water circuit system according to the invention. However, it is sufficient to use only one type.

Preferably, the predefined condition(s) is/are (a) threshold condition(s). That means that the comparing is performed by evaluating whether a monitored physical and/or chemical quantity (such as the concentration of dissolved oxygen in the water flowing in a through-flow pipe connecting the heat exchanger with the heat emitter or such as the partial pressure of the already degassed oxygen in its gaseous phase as is measured in a degassing pipe connecting the degassing device and the vacuum generating device) exceeds a predefined set value or not. If the monitored quantity exceeds this predefined set value, then the removal of dissolved oxygen is started: Especially, a vacuum is applied by the vacuum generating device to the degassing device which then starts the vacuum-based removal of the dissolved oxygen from the circulating water. If the monitored quantity does not exceed the predefined set value, then the removal of dissolved oxygen (especially: the generation and application of the said vacuum) is not started (for example, that means that the vacuum generating device is still left switched-off so that there is no vacuum applied to the degassing device and therefore no dissolved oxygen removal until the continuously monitored quantity exceeds the said predefined set value).

The described evaluation (i.e. comparison with the threshold) can also be done in parallel with several monitored chemical and/or physical quantities: For example, the said concentration of dissolved oxygen in the circulating water can be monitored in parallel (i.e. at the same time) with the said partial pressure of already degassed oxygen in its gaseous phase. Then, if at least one of these two measured and monitored, respectively, quantities exceeds a set value which has been predetermined for the said measured/monitored quantity, the removal of dissolved oxygen (for example: the generation and application of the vacuum) can be started. It is, however, also possible to start the removal of dissolved oxygen only if both of (in general: a certain number of or all of) the monitored/measured quantities respectively exceed their corresponding predetermined set value.

Preferably, the set value(s), i.e. the threshold(s) can be set to zero: This means that the removal of dissolved oxygen is performed continuously without interruption, i.e. the whole time. This is specifically advantageous if one has to expect that a leak in one of the through-flow pipes of the recirculating water circuit system occurs which leads to an undesired introduction of oxygen from the surrounding air into the water circuit system. However, thresholds > 0 can also be predefined so that the generation and application of the vacuum (i.e. the removal of dissolved oxygen) will start only when the content of the dissolved oxygen in the system becomes too high. If a/the measured content of dissolved oxygen later on decreases below a/the predefined threshold > 0, the generation and application of vacuum can be stopped, for example by switching off the vacuum generating device, until a/the measured content of dissolved oxygen increases again and again exceeds the predefined threshold. Then, the removal, especially the generation and application of vacuum will be started again, for example by switching the vacuum generating device on. According to claims 10 or 11, the central controlling device can be realized as or can comprise a microcontroller.

Therein, the central controlling device can send a switching-on instruction to the vacuum generating device when the monitored quantity/quantities exceed(s) the aforementioned predefined set value(s) and the central controlling device can send a switching-off instruction to the vacuum generating device when the said monitored quantity/quantities have decreased, due to the vacuum-based removal of the dissolved oxygen over a certain time, below the said predefined set value(s).

Further advantageous aspects which can be realized in any of the already described recirculating water circuit systems according to the invention are described in dependent claims 12 and 13.

In the configuration as described in dependent claim 13, the oxygen sensor and the degassing device are advantageously arranged upstream of the water distribution means and three-way valve, respectively (i.e. the oxygen sensor and the degassing device are arranged in a section of the water through-flow pipe adjacent to the heat exchanger).

A heating device, boiler or power station according to the invention is described in claim 14 and a method for removing dissolved oxygen according to the invention is described in claim 15.

Compared to the dissolved oxygen removal in the state of the art, the dissolved oxygen removal (and the recirculating water circuit system) according to the invention has the following advantages.

● The invention can be used for hot water generation using HVAC systems (heating, ventilation and air conditioning), such as a heat pump for example and allows an efficient removal of dissolved oxygen from the water circuit therein.

● The dissolved oxygen removal according to the invention includes controlled vacuum conditions and can be performed under low pressure.

Due to this removal of dissolved oxygen under relatively low pressure of approximately between 5 and 0.01 Pa for example, both, corrosion and scale deposition, can be at least reduced, if not prevented with high efficiency.

● No chemicals need to be injected into the system so that no undesired chemical by-products (as a result of the dissolved oxygen removal process) occur.

● The efficient removal of dissolved oxygen from the water circuit according to the invention therefore leads to reduction of corrosion in the system and to decreased scaling.

Hereinafter, embodiments of the present invention are described in detail. Therein, specific components are described which can also be realized, within the scope of the invention as described by the claims, in a more general configuration.

Figure 1 shows the basic configuration of a recirculating water circuit system which is configured for a controlled and/or intermittent removal of dissolved oxygen and of a heat pump comprising this system according to embodiments one and two of the present invention (refrigerant circulating parts of the heat pump are only adumbrated).

Figure 2 shows a control related detail of this system in the configuration of the first embodiment.

Figure 3 shows a control related detail of this system in the configuration of the second embodiment which is similar to the first embodiment, but which uses a pressure sensor as the oxygen monitoring device instead of an oxygen sensor.

Figures 4a and 4b show different degassing devices which can be used in all embodiments of the present invention.

Figure 5 shows the basic configuration of a recirculating water circuit system which is configured for an uncontrolled, continuous removal of dissolved oxygen and of a heat pump comprising this system according to a third embodiment of the present invention (refrigerant circulating parts of the heat pump are only adumbrated).

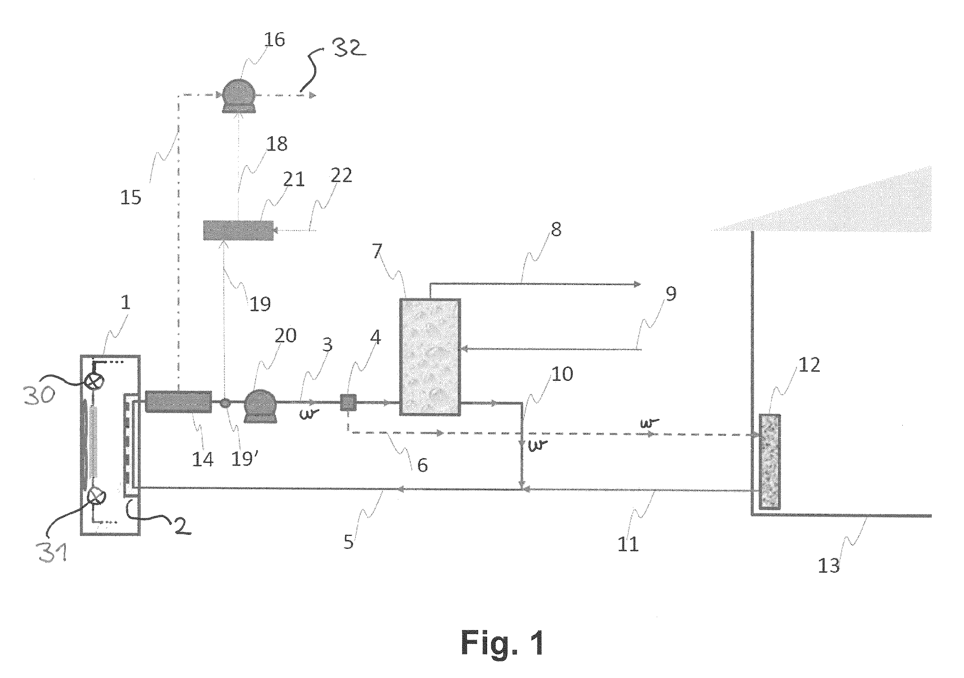

Figure 1 shows a heat pump which comprises a recirculating water circuit system according to the present invention. Those elements of the heat pump which relate to the refrigerant circuit (such as the extension valve 30 and the compressor 31) are only adumbrated, but not described in detail as these elements are well-known for the skilled person.
The outdoor unit 1 of the heat pump (the housing of which encloses the expansion valve 30 and the compressor 31) comprises the heat exchanger 2 which is adapted to produce hot water. This hot water w is fed into a hot water through-flow pipe 3 which connects the said heat exchanger 2 with a heat emitter 12 of the indoor unit of the heat pump. In flowing direction of the hot water w from the heat exchanger 2 to the heat emitter 12, the following components of the recirculating water circuit system of the heat pump are arranged in the through-flow pipe 3: A degassing device 14, downstream thereof an oxygen sensor 19', downstream thereof a water pump 20 and downstream thereof a three-way valve 4 as an example of a distribution means.
Seen in flowing direction from the heat exchanger 2 to the heat emitter 12, the three-way valve 4 branches the through-flow pipe 3 into two branches, a first branch 6 of the through-flow pipe 3 which connects the three-way valve 4 to the heat emitter 12 and a second branch 10 of the through-flow pipe 3 which leads to a hot water tank 7. Consequently, by switching the three-way valve 4, hot water pumped by the pump 20 can either be conveyed to the heat emitter 12 being arranged in a living space 13 of a house (in order to heat this living space 13) via the first branch 6 or to the hot water tank 7 in the second branch 10. Therein, the hot water tank 7 is a through-flow tank so that the outflow of this tank 7 leads into a downstream portion of the second branch 10. This downstream portion discharges in a return water pipe 5 which connects the water outflow side of the heat emitter 12 with the water inflow side of the heat exchanger 2 (that is the return water pipe 5 is arranged to convey the cooled return water, which is depicted with the reference sign 11, from the heat emitter 12 to the heat exchanger 2).
Therefore, the hot water w in the through-flow pipe 3 can be fed into the pipe of the second branch 10 and to the hot water tank 7 on the one hand and into the pipe of the first branch 6 and to the heat emitter 12 inside the living space 13 on the other hand. The cooled return water 11 from the heat emitter 12 is mixed with the water of the pipe of the downstream portion of the second branch 10 (coming from the hot water tank 7), resulting in mixed water flowing in pipe 5 to be returned to the heat exchanger 2.

Furthermore, hot water from tank 7 can be supplied to the living space 13 through a pipe 8 connecting the tank 7 with the living space 13 for utility purposes. From the water network, fresh water can be supplied to the hot water tank 7 through the additional pipe 9 (network water supply pipe).

A controlled and/or intermittent removal of dissolved oxygen according to the invention can be implemented as follows.

According to the invention, the recirculating water circuit system of the heat pump further comprises the vacuum pump 16 and the central controlling device 21 (which is a microcontroller). The gas outlet of the degassing device 14 (which is a water through-flow device) is connected via a degassing pipe 15 to the suction side of the vacuum pump 16. Consequently, if the vacuum pump 16 is switched on (via the central controlling device 21, see below), a vacuum will be applied by pump 16 to the degassing device 14 through pipe 15 which allows the degassing device to perform a vacuum-based removal of dissolved oxygen from the (hot) water w circulating in the recirculating water circuit system. The degassed oxygen can then be removed from pump 16 via its outlet pipe 32.

To control the vacuum-based removal of the dissolved oxygen from the water w, a data line connects the oxygen sensor 19' with the central controlling device 21: Via this data line, a dissolved oxygen sensing signal 19 which is determined by the oxygen sensor 19' can be input to the central controlling device 21 for further evaluation, i.e. comparison therewith (see below). Beyond that, a control line connects the central controlling device 21 with the control of the vacuum pump 16: Via this control line, a control signal 18 from the central controlling device 21 can be input to the control of vacuum pump 16 in order to control pump 16 (for example to switch the operation of pump 16 on or to switch it off).

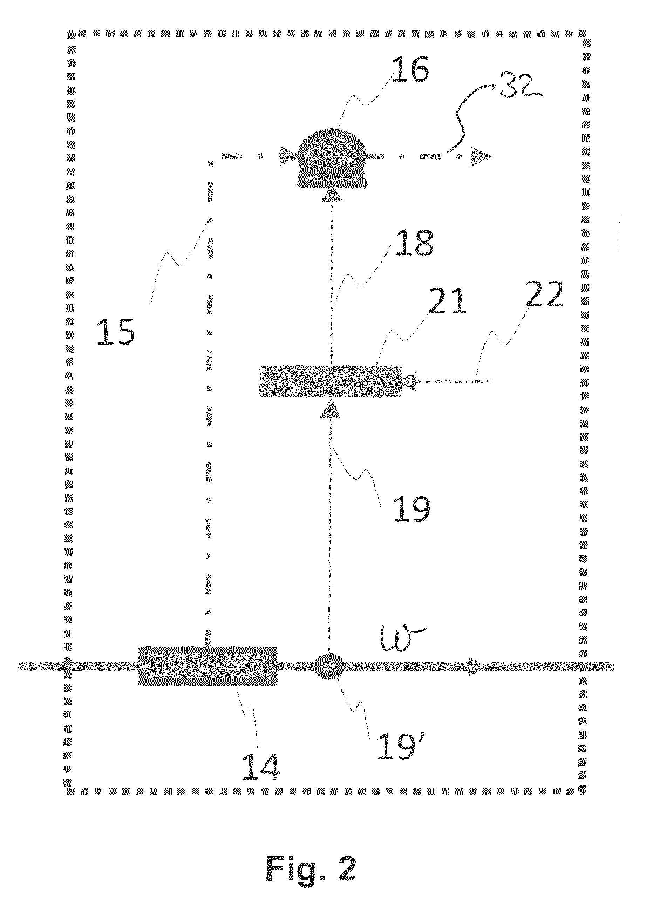

The hot water w from the heat exchanger 2 which is fed to the water through-flow pipe 3 contains undesired dissolved oxygen which is responsible for corrosion of major parts of the shown recirculating water circuit system (for example: corrosion in the heat exchanger 2 and the heat emitter 12) and which is also responsible for scale deposition in major parts (especially: in the through-flow pipe parts) of the system and for pipe clogging related therewith. Consequently, according to the invention, a dissolved oxygen removal operation control which is based on the dissolved oxygen content in the recirculating water circuit system can be performed as follows (see also Figure 2, which shows a detail of the heat pump according to Figure 1 showing the implementation of said control).

The concentration of the dissolved oxygen in the water w flowing in pipe 3 is monitored by the through-flow oxygen sensor 19'. From this concentration, a dissolved oxygen sensing signal 19 which characterizes this concentration is generated and sent via the data line connecting the sensor 19' with the central controlling device 21 to the latter. In the microcontroller of central controlling device 21, sensing signal 19 is compared with a predefined set value 22 as follows, an electrical quantity E is calculated by the controlling device 21 according to

$$E = K \cdot (DO19' - SV22)$$

where DO19' denotes the value of a comparison signal which is based on dissolved oxygen sensing signal 19 and SV22 denotes the value of the predefined set value which characterizes a threshold for the concentration of dissolved oxygen in water w above which a continuous operation of vacuum pump 16 and therefore of dissolved oxygen removal is desired (SV22 is in general larger than 0, but can be also set to equal 0 if a continuous operation of vacuum pump 16 and therefore a continuous removal of dissolved oxygen is desired).
K is the gain.

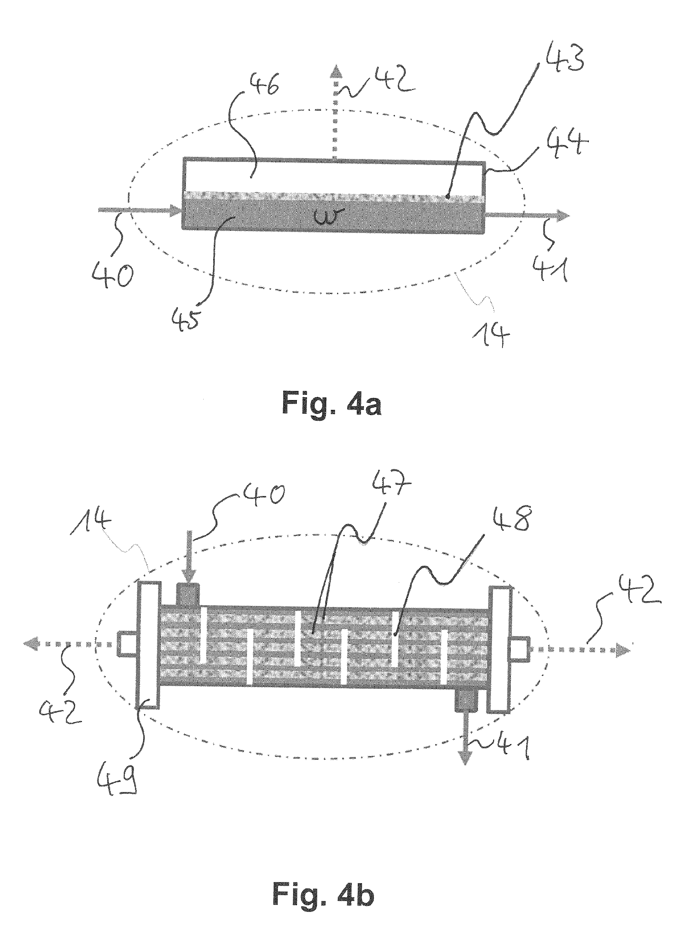

If E > 0, then a control signal of "1" is transmitted via the control line connecting the central controlling device 21 with the vacuum pump 16 in order to switch the pump 16 on (or to keep pump 16 switched on). If, on the other hand, E ≤ 0, a control signal 18 of "0" is sent from the central controlling device 21 to pump 16 in order to switch pump 16 off (or to keep pump 16 switched off). Consequently, as long as E > 0, an ON signal "1" is sent via the control line to pump 16 and pump 16 is continuously operating, i.e. is continuously generating a vacuum and applying the latter via the degassing pipe 15 to the degassing device 14 so that the latter continuously removes dissolved oxygen from the water w circulating in the system. In the present case, especially the usage of one of the devices shown in fig. 4 is advantageous in order to efficiently remove dissolved oxygen from the water w. However, also a direct contact vent condenser can be used.

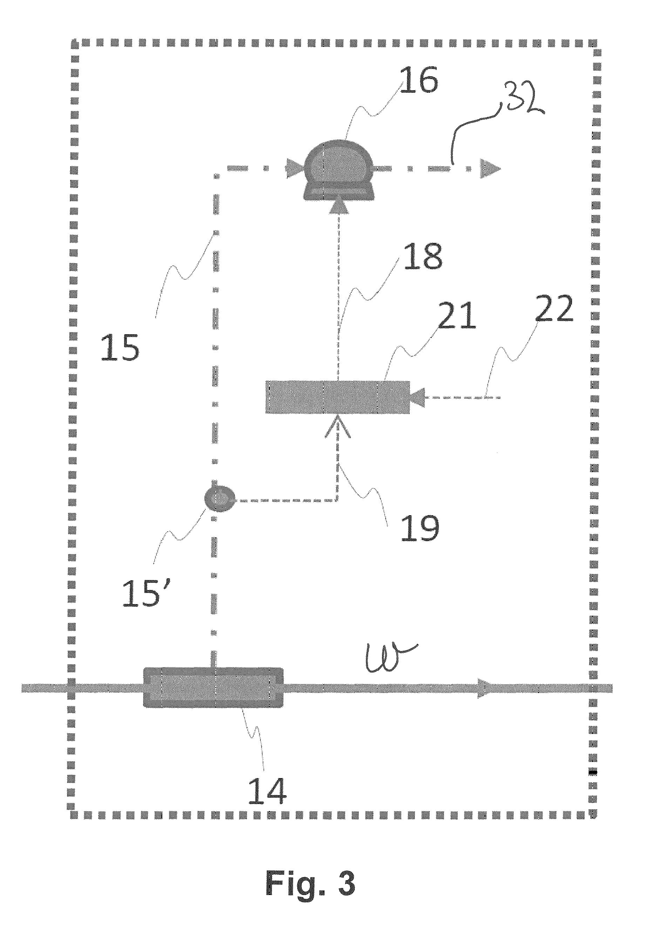

Whereas Figures 1 and 2 show an example of monitoring the oxygen directly in liquid phase (i.e. in the circulating water w) by measuring the concentration of the dissolved oxygen in the water w by through-flow oxygen sensor 19', Figure 3 shows another embodiment of a recirculating water circuit system in a heat pump and of the operation control thereof, respectively, In principle, the system is constructed in a similar manner as shown in Figures 1 and 2 so that only the differences are described hereinafter (all non-described system parts operate in the same manner as already described; identical elements are denoted with identical reference signs and the description of these identical elements is omitted).

Instead of using an oxygen sensor 19' arranged in pipe 3 (which is therefore not necessary in the second embodiments according to Figure 3), the oxygen monitoring device is a pressure sensor 15' which is configured to monitor the content of dissolved oxygen in the water w indirectly, i.e. in gaseous phase. That means that the oxygen monitoring device is a pressure sensor 15' which is arranged as a through-flow gas sensor in degassing pipe 15 connecting the gas output side of degassing device 14 with the suction side of pump 16. A data line connects pressure sensor 15' with central controlling device 21 for transmitting a dissolved oxygen sensing signal 19 from pressure sensor 15' to central controlling device 21.

The operation is similar to the one already described with respect to Figure 2: In case of Figure 3, the partial pressure of the degassed oxygen in pipe 15 is monitored by sensor 15' and the corresponding dissolved oxygen sensing signal 19 is transmitted to central controlling device 21 where the following comparison is performed.

$$E' = K' \cdot (PO15'-PO22).$$

Therein, K' is the gain, PO15' denotes the value of a comparison signal which is based on the dissolved oxygen sensing signal 19 transmitted to controlling device 21 and which can be compared to the predefined set value P022 which characterizes a threshold for the partial pressure of degassed oxygen above which a continuous operation of vacuum pump 16 and therefore of dissolved oxygen removal is desired. In other words, if E' > 0, a control signal 18 of "1" is sent to pump 16 for starting the pump operation (or for keeping the pump 16 working). On the other hand, if E' $\leq$ 0, then a signal 18 of "0" is input to the control unit of pump 16 in order to switch pump 16 off (or to keep pump 16 switched off). Consequently, as long as E' > 0, a continuous degassing operation using vacuum pump 16 is performed.

Of course, the switching of pump 16 can also be varied here (and also in the first embodiment): For example, pump 16 can be switched on for a first predefined time period (for example between 10 minutes and 1 hour) if an increase of E' to a value of E' > 0 is determined once. After this predetermined time period, pump 16 can be switched off for a second predefined time period (for example in order to save energy) after which monitoring of the partial pressure of degassed oxygen in pipe 15 is performed again and the procedure can be repeated. Also an intermittent operation of pump 16 (and therefore of degassing device 14) is therefore possible.

Figure 4a shows a first degassing device 14 which can be used according to all embodiments 1 to 3 (Figures 1 to 3 and 5). This device 14 is a flat membrane-based device with a flat, semi-permeable membrane 43 which is permeable for gas, but impermeable for water and which is made of silicon or ceramic.

The device is configured as a through-flow device for piping through said water w on one side 45 of the membrane (here: the lower side) and for removing said dissolved oxygen from the through-piped water w by separating the dissolved oxygen from the water by oxygen transfer from the water side 45 of the membrane to the gas side 46 (here: space above the membrane 43) of the membrane 43 through the membrane material. 40 depicts the water inlet of device 14, 41 its water outlet. The separated oxygen is then removed by sucking it to the vacuum pump 16 through the vacuum outlet and pump-connection 42. 44 depicts the housing of device 14.

Figure 4b discloses a second degassing device 14 which can be used in the embodiments of the invention. This device 14 constitutes a membrane module type, vacuum-based through-flow device (contactor module) comprising a plurality of hollow fibre membranes 47 (which are also based for example on silicon or ceramic) interspersed with a plurality of baffles 48 in such a manner that the module mechanical stability could be achieved and the retention time of the water inside the device 14 is considerably increased. The basic operation principle for each of the stacked membranes is the same as described with respect to fig. 4a.

This device 14 comprises two vacuum outlets 42 connecting it to pump 16, one water inlet 40 and one water outlet 41. In-between water inlet 40 and water outlet 41, the water flows in a meandering manner through the stacked, hollow fibre membranes 47, wherein the water side spaces on one side of each of the membranes on the one hand and the gas side spaces (not shown) on the other side of each of the membranes on the other hand are arranged to maximize the membrane surface area in contact with water. The housing of device 14 is depicted with reference sign 49.

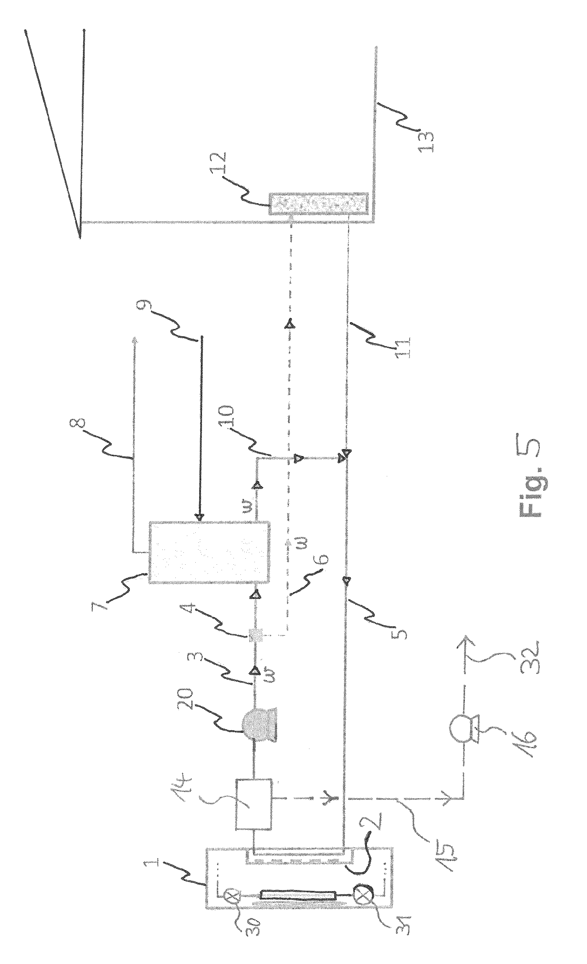

Figure 5 shows a recirculating water circuit system which is configured for an uncontrolled, continuous removal of dissolved oxygen. The basic configuration is as described for fig. 1 so that only the differences are described hereinafter.

All control related elements (elements 18, 19, 21 and 22) are omitted. The degassing device is directly arranged as a through-flow device in the water through-flow pipe 3. Vacuum pump 16 is continuously operating, so that vacuum is continuously applied, via degassing pipe 15, to degassing device 14 to permanently remove dissolved oxygen from the water w in the pipe 3. (Consequently, in its operation, this configuration equals the case of a threshold value < 0 for the configuration described in figs. 1 to 3.)

Reference sign list:

1 = outdoor unit,
2 = heat exchanger,
3 = water through-flow pipe,
w = (hot) water,
4 = three-way valve,
5 = return water pipe,
6 = hot water branch to heat emitter,
7 = hot water tank,
8 = hot use water pipe to living space,
9 = network water supply pipe,
10 = second branch containing the hot water tank and leading from the three-way valve to the return water pipe,
11 = return water from heat emitter,
12 = heat emitter,
13 = living space,
14 = degassing device,
15 = degassing pipe,
16 = vacuum pump,
18 = control signal to vacuum pump from central controlling device,
19 = dissolved oxygen sensing signal to central controlling device,
15' = pressure sensor,
19' = dissolved oxygen sensor,
20 = water pump,
21 = central controlling device,
22 = set value
30 = expansion valve,
31 = compressor,
32 = outlet pipe of vacuum pump,
40 = water inlet,
41 = water outlet,
42 = vacuum outlet of degassing device / connection(s) of the degassing device with the vacuum pump,
43 = membrane,
44 = housing,
45 = water side of membrane
46 = gas side of membrane (degassed oxygen side),
47 = stacked membrane,
48 = baffles,
49 = housing

**Claims**

1. Recirculating water circuit system comprising
   a degassing device (14) being configured for vacuum-based removal of dissolved oxygen from water (w) circulating in the recirculating water circuit system; and
   a vacuum generating device (16) being connected (15) to the degassing device (14) and being configured to generate a vacuum and to apply it to the degassing device (14) in order to start and/or sustain said vacuum-based removal by the degassing device (14).

2. Recirculating water circuit system according to the preceding claim
   *characterized in that*
   the degassing device (14) comprises one or more membrane(s) (43, 47) which is/are oxygen permeable and water impermeable, preferably one or more silicon-based or ceramic-based membrane(s), and
   **in that** the degassing device (14) is configured as a through-flow device for piping through said water (w) in a membrane contacting manner and for removing said dissolved oxygen from the through-piped water (w) by separating the dissolved oxygen from the water by oxygen transfer through the membrane(s) (43, 47).

3. Recirculating water circuit system according to the preceding claim
*characterized in that*
the said membrane(s) (43, 47) is/are either flat (43) or are configured as a hollow fibre module arranged preferably as a bundle(47).

4. Recirculating water circuit system according to one of the preceding claims
*characterized in that*
the degassing device (14) comprises a direct contact vent evaporator which is configured as a through-flow device for piping through said water (w) and for removing said dissolved oxygen from the through-piped water (w) by water surface gas emanation.

5. Recirculating water circuit system according to one of the preceding claims
*characterized in that*
the recirculating water circuit system is either configured for an uncontrolled, continuous removal of dissolved oxygen from the water (w) containing dissolved oxygen or configured for a controlled and/or intermittent removal of dissolved oxygen from the water (w) containing dissolved oxygen.

6. Recirculating water circuit system according to the preceding claim
*characterized in that*
the recirculating water circuit system is configured for the controlled and/or intermittent removal and further comprises an oxygen monitoring device (15', 19') being configured to monitor one or more physical and/or chemical quantity/quantities characterizing the content of dissolved oxygen in the water (w) circulating in the recirculating water circuit system,
wherein the recirculating water circuit system is configured to start and/or sustain said vacuum-based removal of dissolved oxygen from the water (w) circulating in the recirculating water circuit system, preferably to start and/or to sustain said generation and application of said vacuum for removing dissolved oxygen from the water (w) circulating in the recirculating water circuit system by said degassing device (14), when the one or more physical and/or chemical quantity/quantities monitored by the oxygen monitoring device (15', 19') fulfil(s) one or more predefined condition(s).

7. Recirculating water circuit system according to the preceding claim
*characterized in that*
the oxygen monitoring device (15', 19') comprises an oxygen sensor (19') being configured to monitor the concentration of dissolved oxygen in the water (w) circulating in the recirculating water circuit system.

8. Recirculating water circuit system according to one of the two preceding claims
*characterized in that*
the oxygen monitoring device (15', 19') comprises a pressure sensor (15') being configured to monitor the partial pressure of degassed oxygen removed from the water (w) circulating in the recirculating water circuit system,
wherein the pressure sensor (15') is preferably arranged in or at a degassing pipe (15) connecting the degassing device (14) with the vacuum generating device (16).

9. Recirculating water circuit system according to one of the three preceding claims
*characterized in that*
the recirculating water circuit system is configured to compare the physical and/or chemical quantity/quantities monitored by the oxygen monitoring device (15', 19') with one or more set value(s) and
**in that** the recirculating water circuit system is configured to start and/or sustain said vacuum-based removal of dissolved oxygen from the water (w) circulating in the recirculating water circuit system, preferably to start and/or to sustain said generation and application of said vacuum for removing dissolved oxygen from the water (w) circulating in the recirculating water circuit system by said degassing device (14), dependent upon a result of said comparison.

10. Recirculating water circuit system according to one of the four preceding claims
*characterized by*
a central controlling device (21) being connected to the vacuum generating device (16) and to the oxygen monitoring device (15', 19'), being configured to receive a dissolved oxygen sensing signal (19) from the oxygen monitoring device (15', 19') and being configured to control the removal of the dissolved oxygen by the degassing device (14), especially to control the vacuum generating device (16), based on the received dissolved oxygen sensing signal (19).

**11.** Recirculating water circuit system according to both preceding claims
***characterized in that***
the central controlling device (21) is configured to compare the physical and/or chemical quantity/quantities monitored by the oxygen monitoring device (15', 19') with the one or more set value(s) by using said received dissolved oxygen sensing signal (19) and to start and/or to sustain said generation and application of said vacuum for removing dissolved oxygen from the water (w) circulating in the recirculating water circuit system by said degassing device (14) by switching said vacuum generating device (16) dependent upon said result of said comparison.

**12.** Recirculating water circuit system according to one of the preceding claims
***characterized in that***
the recirculating water circuit system comprises, for the circulation of the water (w):

a heat exchanger (2), preferably the heat exchanger of an outdoor unit (1) in case of a monoblock system or a hydrobox unit in case of a split system heat pump;
a heat emitter (12), preferably located in a living space to be heated; and
a water through-flow device (3), preferably a water through-flow pipe,
connecting the heat exchanger (2) with the heat emitter (12), especially a hot water pipe adapted to convey hot water from the heat exchanger (2) to the heat emitter (12),
wherein the degassing device (14) is arranged in or at said water through-flow device (3) and configured for vacuum-based removal of dissolved oxygen from water (w) flowing through said water through-flow device (3).

**13.** Recirculating water circuit system according to the preceding claim
***characterized by***
a water distribution means, preferably a three-way valve (4), arranged in said water through-flow device (3) for branching this device (3), downstream of said degassing device (14), into a first branch (6) being connected to said heat emitter (12) and a second branch (10) containing a tap water tank (7), preferably a hot water tank.

**14.** Heating device, especially heat pump, used for space heating and/or for hot water production, boiler or power station
***characterized by***
comprising a recirculating water circuit system according to one of the preceding claims.

**15.** Method for removing dissolved oxygen in a recirculating water circuit system, wherein the method comprises:

providing a degassing device (14) and configuring the degassing device (14) for vacuum-based removal of dissolved oxygen from water (w) circulating in the recirculating water circuit system; and
connecting (15) a vacuum generating device (16) to the degassing device (14), generating a vacuum with the vacuum generating device (16) and applying the vacuum to the degassing device (14) in order to start and/or sustain said vacuum-based removal by the degassing device (14),
wherein the method is preferably performed in a recirculating water circuit system according to any one of claims 2 to 13.

Fig. 1

**Fig. 2**

**Fig. 3**

**Fig. 4a**

**Fig. 4b**

Fig. 5

Europäisches
Patentamt

European
Patent Office

Office européen
des brevets

# EUROPEAN SEARCH REPORT

Application Number

EP 13 19 2787

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 101 36 570 A1 (DMS WASSER WAERMETECHNIK GMBH [DE]) 12 September 2002 (2002-09-12) | 1-3, 5-12,14, 15 | INV. C02F1/20 |
| Y | * paragraphs [0003], [0010], [0012], [0014] - [0017], [0020], [0021], [0031], [0033]; claims 1,5,6,7; figure 1 * | 13 | ADD. C02F1/00 C02F103/02 C02F1/44 |
| X | WO 03/086573 A1 (DOMINION ENG INC [US]) 23 October 2003 (2003-10-23)<br><br>* paragraphs [0039] - [0056]; figures 1,2 * | 1-3, 5-11,14, 15 | |
| X | JP 2009 115428 A (NITAMI TAKESHI; TASAKI KAZUYUKI) 28 May 2009 (2009-05-28)<br>* abstract; figure 1 * | 1-3,5, 14,15 | |
| Y | DE 37 08 950 A1 (KEMMELMEYER WERNER [DE]) 29 September 1988 (1988-09-29)<br>* column 4, line 3 - line 18; figure 1 * | 13 | |
| X | Desikan Bharathan ET AL: "An Assessment of the Use of Direct Contact Condensers with Wet Cooling Systems for Utility Steam Power Plants",<br><br>16 October 2013 (2013-10-16), XP55132699, Retrieved from the Internet: URL:http://www.nrel.gov/docs/legosti/old/4514.pdf [retrieved on 2014-07-31]<br>* page 7 - page 9; figures 3-1,3-2 *<br>* page 13, paragraph 4.1 - page 14 *<br>* page 20 - page 23 * | 4 | TECHNICAL FIELDS SEARCHED (IPC)<br><br>C02F<br>B01D<br>F24D<br>F04C<br>F24H<br>F22D |
| X | EP 2 574 387 A1 (STORK THERMEQ B V [NL]) 3 April 2013 (2013-04-03)<br>* paragraphs [0001], [0019]; figure 1 * | 4 | |

The present search report has been drawn up for all claims

| Place of search | Date of completion of the search | Examiner |
|---|---|---|
| Munich | 31 July 2014 | Beckmann, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

Europäisches
Patentamt

European
Patent Office

Office européen
des brevets

**Application Number**

EP 13 19 2787

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 13 19 2787

The Search Division considers that the present European patent application does not comply with the requirements of unity of invention and relates to several inventions or groups of inventions, namely:

1. claims: 1-3, 15(completely); 5-14(partially)

   Recirculating water circuit system comprising at least one oxygen permeable membrane for removing oxygen by oxygen transfer through the membrane.
   ---

2. claims: 4(completely); 5-14(partially)

   Recirculating water circuit system comprising a direct contact vent evaporator for removing dissolved oxygen by water surface emanation.
   ---

**EP 2 873 649 A1**

**ANNEX TO THE EUROPEAN SEARCH REPORT
ON EUROPEAN PATENT APPLICATION NO.**

EP 13 19 2787

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2014

| Patent document cited in search report | | Publication date | Patent family member(s) | | Publication date |
|---|---|---|---|---|---|
| DE 10136570 | A1 | 12-09-2002 | NONE | | |
| WO 03086573 | A1 | 23-10-2003 | AU | 2003233490 A1 | 27-10-2003 |
| | | | CA | 2481540 A1 | 23-10-2003 |
| | | | US | 2004025696 A1 | 12-02-2004 |
| | | | WO | 03086573 A1 | 23-10-2003 |
| JP 2009115428 | A | 28-05-2009 | NONE | | |
| DE 3708950 | A1 | 29-09-1988 | NONE | | |
| EP 2574387 | A1 | 03-04-2013 | CN | 103011323 A | 03-04-2013 |
| | | | EP | 2574387 A1 | 03-04-2013 |
| | | | KR | 20130033987 A | 04-04-2013 |
| | | | RU | 2012140341 A | 27-03-2014 |
| | | | US | 2013074696 A1 | 28-03-2013 |

EPO FORM P0459

For more details about this annex : see Official Journal of the European Patent Office, No. 12/82

19

**REFERENCES CITED IN THE DESCRIPTION**

**Patent documents cited in the description**

- CA 2308744 C

- US 5244600 A

**Non-patent literature cited in the description**

- **J. ZHOU et al.** Hybrid membrane/absorption process for acid gas removal in FLNG applications. Gas Technology Institute

- **S.H. MACKLIN et al.** Carbon dioxide and dissolved oxygen removal from makeup water by gas transfer membranes. GE Water & Process Technologies, January 2010